# EUROPÄISCHE PATENTANMELDUNG

(11) **EP 1 122 123 A2**
(43) Veröffentlichungstag der Anmeldung: **08.08.2001**
(21) Anmeldenummer: 01101760.5
(22) Anmeldetag: 26.01.2001
(51) Int. Cl.: B60N 2/50

(54) **Sitz für Luft- und Landfahrzeug, insbesondere für Leichtflugzeuge**

(30) Priorität: 01.02.2000 DE 20001748 U
(71) Anmelder: Ostmecklenburgische Flugzeugbau GmbH, 17039 Trollenhagen (DE)
(72) Erfinder: Die Erfindernennung liegt noch nicht vor
(74) Vertreter: Voss, Karl-Heinz

(57) **Zusammenfassung**

Die Neuerung betrifft einen Sitz, insbesondere für Sport- und Leichtflugzeuge, der den aktuellen Sicherheitsanforderungen (Crasheigenschaften) entspricht. Ein Einsatz ist auch in kleinen, leichten Landfahrzeugen wie Go-Karts möglich.

Aufgabe der Neuerung ist es, einen Sitz für insbesondere Leichtflugzeuge zu gestalten, der bei geringem Gewicht und Raumbedarf eine hohe Festigkeit, Formstabilität und gute Dämpfungseigenschaften besitzt und weiterhin eine Verstellung des eigentlichen Sitzes ermöglicht.

Erfindungsgemäß wird die Aufgabe dadurch gelöst, dass der Sitz aus einer Sitzschale(1) mit mindestens eine in der Sitzfläche integrierte Führung(2) für die Aufnahme eines Hilfsrahmens(3), einem aus Längs- und Querzügen bestehender Grundrahmen(7), der am Fahrzeugboden befestigbar ist und der einen vorne höher angeordneten zusätzlichen Querzug(7.1) besitzt, einem aus zwei Längszüge und durch mindestens einen Querzug(6) verbundenen Hilfsrahmen(3), dessen vorderen Enden der Längszüge an dem vorne höher angeordneten zusätzlichen Querzug(7.1) des Grundrahmens(7) drehbar gelagert sind, besteht. Mindestens ein Dämpfungselement(8)ist etwa senkrecht zwischen dem hinteren Teil des Grundrahmens(7) und dem hinteren Hilfsrahmen(3) angeordnet.

## Beschreibung

Die Neuerung betrifft einen Sitz, insbesondere für Sport- und Leichtflugzeuge, der den aktuellen Sicherheitsanforderungen (Crasheigenschaften)entspricht. Ein Einsatz ist auch in kleinen, leichten Landfahrzeugen wie Go-Karts möglich.

### [Stand der Technik]

Bekannt sind eine Vielzahl von Sitzausbildungen für unterschiedliche Ansprüche und Fahrzeugtypen. Die grundsätzlichen Anforderungen hinsichtlich der Sicherheitseigenschaften sind aber bei allen Ausführungen für Luftfahrzeuge gleich. Das betrifft besonders die Crasheigenschaften beim horizontalen und vertikalen Aufprall eines Flugzeuges. Es ist eine große Festigkeit und Formstabilität des gesamten Sitzes erforderlich, um die hohen Kräfte ohne größere Verformung aufzunehmen, damit die darin sitzende Person geschützt ist. Zur Abschwächung der Aufprallwirkung für die Person durch die starke negative Beschleunigung ist es bekannt, Dämpfungselemente im Sitzgestell anzuordnen. Das können rückstellbare oder sich nicht umkehrbar verformende Elemente sein (DE OS 1755006, GM 8526591, US PS 4861103 u.a.). Je nach Aufbau des Sitzgestells und Ausbildung der Elemente ergeben sich verschiedene Anordnungen. Eine direkte Einbindung in senkrechte Stützen ist aufwendig, da zusätzlich Führungen für die Dämpfbewegung während des Crash erforderlich sind.
Gemäß der DE OS 4221974 ist es weiterhin bekannt, das stoßdämpfende Elemente diagonal in einem Rahmen des Sitzes anzuordnen. Mittels vier Drehlagerungen an den Verbindungen der Rahmenteile einer Gestellseite ergibt sich ein Scherenparallelogramm, das die erforderliche Bewegung ermöglicht. Diese Lösung bietet viel Raum für das Dämpfungselement. Nachteilig ist die große Bauhöhe und der Aufwand für die Drehlagerungen. Eine den Anforderungen entsprechende übliche Gestaltung des Sitzes führt zu relativ schweren Konstruktionen, die sich besonders bei kleinen Flugzeugen auf die Gesamtmasse negativ auswirken. Aus diesem Grund und wegen der eingeschränkten Raumverhältnisse sind bei Leichtflugzeugen nur einfache Sitzschalen üblich, die direkt am Rumpf befestigt werden. Die Sicherheitseigenschaften dieser Sitze sind aber vollkommen unzureichend und entsprechen nicht den heutigen Anforderungen. Eine sicherheitstechnische Zulassung ist deshalb nur noch in Form einer Einzelzulassung erhältlich.
Zur Minderung des Gewichtes wurde in der DE OS 3811939 vorgeschlagen, Sitzteile in Sandwichbauweise auszuführen. Dabei wird eine Sandwichplatte von beiden Seiten mit Deckschichten verklebt. Durch diese bekannte Technologie, die allerdings arbeitsaufwendig ist, wird eine hohe Festigkeit bei geringem Gewicht erzielt. Gemäß der Erfindung werden aber nur Einzelteile(Sitz, Holme, Rückenlehne) gefertigt und durch entsprechende Elemente verbunden, was einen zusätzlichen Aufwand erfordert.

### [Aufgabe der Erfindung]

Aufgabe der Neuerung ist es deshalb, einen Sitz für insbesondere Leichtflugzeuge zu gestalten, der bei geringem Gewicht und Raumbedarf eine hohe Festigkeit, Formstabilität und gute Dämpfungseigenschaften besitzt und weiterhin eine Verstellung des eigentlichen Sitzes ermöglicht.

Neuerungsgemäß wird die Aufgabe gemäß den Merkmalen des Anspruches eins gelöst.
Durch die neue Kombination von Sitzschale mit drehbar gelagerten Hilfsrahmen und über Dämpfungselemente verbundenen Hauptrahmen ist dieser Sitz sehr leicht, formstabil und besitzt eine großen Dämpfungsgrad.
Die drehbare Lagerung des Hilfsrahmens auf dem vorderen, oberen Grundrahmen ermöglicht gleichzeitig Dämpfungswege und eine Führung des/der Dämpfungselemente/s. Die Sitzschale ist auf dem Hilfsrahmen horizontal verschiebbar. Durch eine horizontale Verschiebung der Aufnahme für die obere Lagerung des Dämpfungselementes erfolgt eine vertikale Verschwenkung der Sitzschale. Diese Anordnung ist gleichzeitig auch raumsparend, was für kleine Fahrgastzellen wichtig ist. Weitere günstige Ausgestaltungen der Neuerung sind in den Unteransprüchen aufgeführt.

### [Beispiele]

Nachfolgend soll die Neuerung an einem Ausführungsbeispiel erläutert werden.

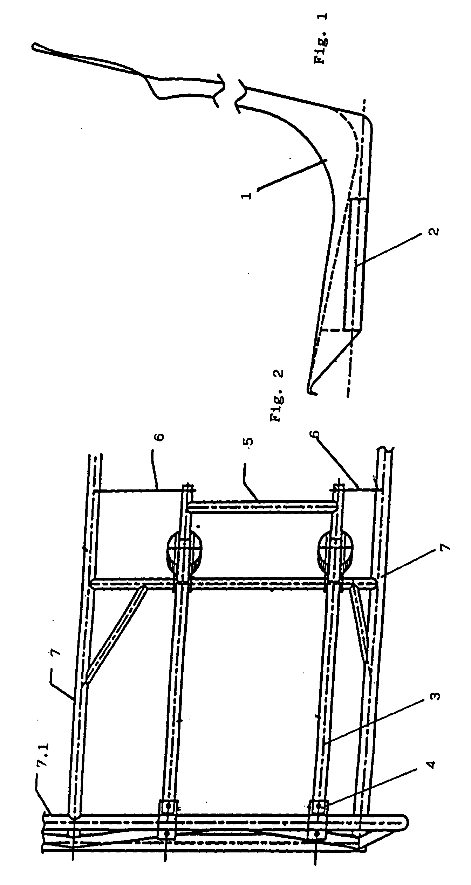

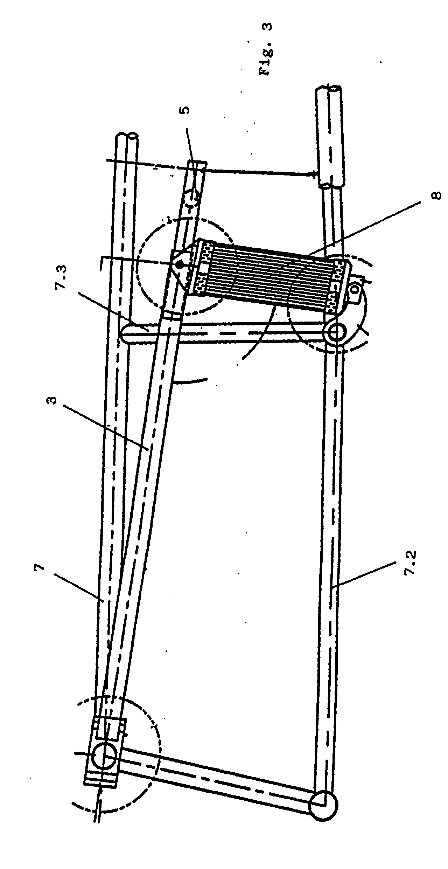

Die Figur 1 zeigt die Sitzschale in der Seitenansicht, Fig. 2 Grund- und Hilfsrahmenanordnung in der Draufsicht und Fig. 3 das Gleiche in der Vorderansicht.
Die Sitzschale 1 mit Rücklehne und Sitzfläche besteht aus einem Stück. Gefertigt ist diese aus mehrlagigem Laminat aus Glasfasermatten und Rovings. Unter der Sitzfläche ist an jeder Seite ein Führungsrohr 2 einlaminiert. Damit wird die Sitzschale auf einem Hilfsrahmen 3 geführt. Die Seiten der Rücklehne und Sitzfläche sind gewölbt und durch zusätzliche, entsprechend schmale Laminatlagen und Sandwichschichten verstärkt.
Der Hilfsrahmen 3 und der Grundrahmen 7 besteht im Beispiel aus verschweißten Rohren. Der Grundrahmen 7 setzt sich aus einem unteren 7.2 und oberen 7 Längszug- und Querzügen zusammen, die durch Stützen 7.3 verbunden sind. Der Grundrahmen wird am Fahrzeugboden befestigt. Der Hilfsrahmen 3 besteht aus zwei Längszügen, die durch einen Querzug 5 verbundenen sind. Die Längszüge des Hilfsrahmens 3 sind zwischen den Längszügen 7.2 des Grundrahmens angeordnet und vorne an dem oberen, vorderen Querzug 7.1 des Grundrahmens 7 drehbar gelagert.
Die vorderen Enden der beiden Längszüge des Hilfsrahmens 3 sind in Kreuzklemmen 4 befestigt, die drehbar den vorderen, oberen Querzug 7.1.des Grundrahmens 7 umgreifen. In die hinteren Enden der beiden Längszüge des Hilfsrahmens 3 ist je ein Rohr eingeschoben, die durch einen Querzug 5 verbunden sind. Diese bilden eine verschiebbare Aufnahme für die obere Lagerung des Dämpfungselementes 8. Die unteren Lagerungen der Dämpfungselemente 8 sind drehbar am Grundrahmen 7 ausgebildet, so dass durch ein Verschieben der oberen Aufnahme ein Schwenken der Sitzschale ermöglicht wird. Die Dämpfungselemente bestehen aus einem zylinderförmigen Wabengitter aus Leichtmetall, das an den Enden in Aufnahmen eingefaßt ist, die gleichzeitig die Lagerköpfe bilden. Zur Stabilisierung sind die hinteren Enden der beiden Längszüge des Hilfsrahmens 3 durch ein Seil 6 mit den hinteren, unteren Enden der beiden Längszüge 7.2 des Grundrahmens 7 verbunden.

## Patentansprüche

1. Sitz für Luft- und Landfahrzeuge, insbesondere für Leichtflugzeuge, bestehend aus Sitzschale, Rahmen und Dämpfungseinrichtungen, dadurch gekennzeichnet, dass dieser besteht aus
a) einer Sitzschale(1) mit mindestens eine in der Sitzfläche integrierte Führung(2) für die Aufnahme eines Hilfsrahmens (3),
b) einem aus Längs- und Querzügen bestehender Grundrahmen(7), der am Fahrzeugboden befestigbar ist und der einen vorne höher angeordneten zusätzlichen Querzug(7.1) besitzt,
c) einem aus zwei Längszüge und durch mindestens einen Querzug(6) verbundenen Hilfsrahmen(3), dessen vorderen Enden der Längszüge an dem vorne höher angeordneten zusätzlichen Querzug (7.1) des Grundrahmens(7) drehbar gelagert sind,
d) und mindestens einem Dämpfungselement(8), das etwa senkrecht zwischen dem hinteren Teil des Grundrahmens(7) und dem hinteren Hilfsrahmen(3) angeordnet ist/sind.

2. Sitz nach Anspruch 1, dadurch gekennzeichnet, dass die Rücklehne und Sitzfläche einteilig, schalenförmig aus mehrlagigem Laminat gebildet ist, und unter der Sitzfläche an jeder Seite ein Führungsrohr(2) einlaminiert ist.

3. Sitz nach Anspruch 1 und 2, dadurch gekennzeichnet, dass die Seiten der Rücklehne und Sitzfläche gewölbt und durch zusätzliche, entsprechend schmale Laminatlagen verstärkt sind.

4. Sitz nach Anspruch 1 bis 3, dadurch gekennzeichnet, dass der Grundrahmen(7) aus unteren und oberen Längs- und Querzügen besteht, die miteinander und mit Stützen(7.3) verschweißt sind und der am Fahrzeugboden befestigbar ist.

5. Sitz nach Anspruch 1 bis 4, dadurch gekennzeichnet, dass die vorderen Enden der beiden Längszüge des Hilfsrahmens(3) zwischen den oberen Längszügen des Grundrahmens(7), an dem oberen, vorderen Querzug (7.1) dieses Grundrahmens drehbar gelagert sind,

6. Sitz nach Anspruch 1 bis 5, dadurch gekennzeichnet, dass die vorderen Enden der beiden Längszüge des Hilfsrahmens(3) mittels Kreuzklemmen(4) drehbar mit dem vorderen, oberen Querzug (7.1) des Grundrahmens(7) verbunden ist.

7. Sitz nach Anspruch 1 bis 6, dadurch gekennzeichnet, dass in die hintere Enden der beiden Längszüge des Hilfsrahmens(3) je eine verschiebbare Aufnahmen für die obere Lagerung des Dämpfungselementes(8) angeordnet ist.

8. Sitz nach Anspruch 1 bis 7, dadurch gekennzeichnet, dass die untere Lagerung der Dämpfungselemente(8) drehbar am Grundrahmen(7) ausgebildet ist, so dass durch ein Verschieben der oberen Aufnahme eine Neigungsverstellung der Sitzschale(1) ermöglicht wird.

9. Sitz nach Anspruch 1 bis 8, dadurch gekennzeichnet, dass das Dämpfungselement(8) aus einem zylinderförmigen Wabengitter aus Leichtmetall besteht, das an den Enden in zylinderförmigen Aufnahmen mit Lagerstelle geführt ist.

10. Sitz nach Anspruch 1 bis 9, dadurch gekennzeichnet, dass die hinteren Enden der beiden Längszüge des Hilfsrahmens(3) durch je ein Seil(6) mit den hinteren, unteren Enden der beiden Längszüge des Grundrahmens(7) verbunden sind.

11. Sitz nach Anspruch 1 bis 10, dadurch gekennzeichnet, dass zur Sicherung der horizontalen Stellung der Sitzschale(1) ein Doppelbügel vertikal schwenkbar am vorderen Sitzbodenbereich befestigt ist, der mit einem Zapfen in den oberen Längszug des Grundrahmens(7) einrastbar ist.
